**Europäisches Patentamt**

**European Patent Office**

**Office européen des brevets**

(11) Veröffentlichungsnummer: **0 054 937**
**A1**

## (12) EUROPÄISCHE PATENTANMELDUNG

(21) Anmeldenummer: **81110597.2**

(22) Anmeldetag: **21.12.81**

(51) Int. Cl.³: **F 16 C 3/02**

(30) Priorität: **24.12.80 DE 3049117**

(43) Veröffentlichungstag der Anmeldung: **30.06.82**
**Patentblatt 82/26**

(84) Benannte Vertragsstaaten: **AT BE CH DE FR GB IT LI LU NL SE**

(71) Anmelder: **SCHWEIZERISCHE ALUMINIUM AG, CH-3965 Chippis (CH)**

(72) Erfinder: **Friese, Günther, Dr. Dipl.-Ing., Dufourstrasse 189, CH-8000 Zürich (CH)**

(74) Vertreter: **Hiebsch, Gerhard F., Dipl.-Ing., Erzbergerstrasse 5A Postfach 464, D-7700 Singen 1 (DE)**

(54) **Antriebswelle, insbesondere für Fahrzeuge.**

(57) Eine Antriebswelle, insbesondere für Fahrzeuge mit einem rohrartigen Körper sowie an dessen Enden angebrachten Gelenken, welche jeweils an einem Einsatzkopf des Körpers lagern soll zur Krafteinsparung von möglichst geringem Gewicht und darüber hinaus schwingungsarm sein.

Dies wird dadurch erreicht, dass der Körper (10) der Antriebswelle (1) aus einem Leichtmetallrohr besteht, dessen Hohlraum mit einem Kern (11) aus Kunststoffschaum gefüllt ist. Dabei soll der Kern (11) aus geschäumtem PVC oder PU bestehen und/oder der Körper (10) mit wenigstens einer Oxidschicht (12) versehen sein.

# DIPL.-ING. GERHARD F. HIEBSCH

## PATENTANWALT

0054937

PROFESSIONAL REPRESENTATIVE BEFORE THE EUROPEAN PATENT OFFICE

MANDATAIRE AGRÉÉ PRÈS L'OFFICE EUROPÉEN DES BREVETS

D-7700 SINGEN 1
Erzbergerstr. 5a

Telegr./Cables:
Bodenseepatent
Telex 7 93 850
Telefon (07731) 63075
63076

Mein Zeichen
My ref /Ma ref  AL-1440/EPA

I/ch
Datum/Date

Schweizerische Aluminium AG

===============================

CH-3965 Chippis

================

---

## Antriebswelle, insbesondere für Fahrzeuge

---

Die Erfindung betrifft eine Antriebswelle, insbesondere für Fahrzeuge mit einem rohrartigen Körper sowie an dessen Enden angebrachten Gelenken, welche jeweils an einem Einsatzkopf des Körpers lagern.

Antriebswellen, insbesondere Kardanwellen von Kraftfahrzeugen, welche aus Stahlrohren hergestellt sind, neigen bekanntlich besonders bei hohen Drehzahlen zu Schwingungserscheinungen, die vorzeitigen Verschleiß beim Antriebssystem und außerdem unangenehme Geräuschentwicklung zur Folge haben. Besonders schwerwiegend sind diese Erscheinungen bei den sehr langen Kardanwellen von Lastkraftwagen und Bussen sowie bei Fahrzeugen, deren Kardanwellen mit Motordrehzahl laufen. Letzteres ist dann der Fall, wenn der Motor an der Vorderachse und das Schalt-

- 2 -

BAD ORIGINAL

getriebe bzw. das Automatik- Getriebe nahe der Hinterachse angeordnet sind. Diese Anordnung bietet bekanntlich gegenüber der herkömmlichen Bauweise mit Hinterradantrieb und insbesondere gegenüber dem Frontantrieb den Vorteil annähernd gleicher Belastung von Vorderrädern und Hinterrädern.

Während beim Frontantrieb Gewichtseinsparungen durch Wegfall der Kardanwelle erzielt werden, müssen bei anderen Anordnungen die beschriebenen und andere damit verbundene Nachteile in Kauf genommen werden, beispielsweise Un-tersteuerungsneigung, Schwergängigkeit der Lenkung, Be-einflussung der Lenkung beim Lastwechsel oder dergleichen.

Angesichts dieser Gegebenheiten hat sich der Erfinder das Ziel gesetzt, insbesondere für Fahrzeuge mit vorn liegendem Motor bei angetriebenen Hinterrädern -- vor allem in der sehr vorteilhaften Ausführungsform mit Schaltgetriebe bzw. automatischem Getriebe in der Nähe der Hinterachse -- eine Antriebswelle zu schaffen, welche zur Krafteinsparung von möglichst geringem Gewicht und darüber hinaus schwingungsarm ist.

Zur Lösung dieser Aufgabe führt, daß der Körper aus einem Leichtmetallrohr besteht, dessen Hohlraum mit einem Kern aus Kunststoffschaum gefüllt ist, bevorzugtermaßen mit einem Kern aus schwingungsdämpfendem geschäumtem Polyvinylchlorid oder Polyurethan.

Eine derartige Antriebswelle erfüllt die vorstehend genannten Forderungen in nahezu idealer Weise.

Auch liegt es im Rahmen der Erfindung, den Kern aus faserverstärktem Kunststoff herzustellen, beispielsweise aus Polyester.

Gegen äußere Korrosion, vor allem durch Streusalz od. dgl., kann das Leichtmetallrohr erfindungsgemäß durch eine Oxydschicht, gegebenenfalls auch durch einen Anstrich, geschützt werden. Nach einem weiteren Merkmal der Erfindung wird statt der Oxydschicht oder zusätzlich zu ihr das Leichtmetallrohr mit einem Außenmantel aus Kunststoff oder aus Gummi versehen, in einer besonders günstigen Ausführungsform mit einem Teflonschlauch. Auch dieser Mantel kann im Rahmen der Erfindung eine Faserverstärkung aufweisen.

Der Mantel bietet gleichzeitig Schutz gegen Steinschlag und trägt in wesentlicher Weise zur Schwingungsdämpfung und Geräuschminderung bei.

Derartige schwingungsarme Kardanwellen in Leichtbauweise ermöglichen die Einsparung von Zwischenlagern, wie sie bei geteilten Kardanwellen üblich -- an sich aber unerwünscht -- sind. Damit werden weitere Gewichtseinsparungen erzielt.

Die erfindungsgemäße Antriebswelle eignet sich sowohl für Kraftfahrzeuge aller Art als auch als Antriebswelle für Maschinen, Schiffe, Schienenfahrzeuge, Helikopter und anderes Luftgerät.

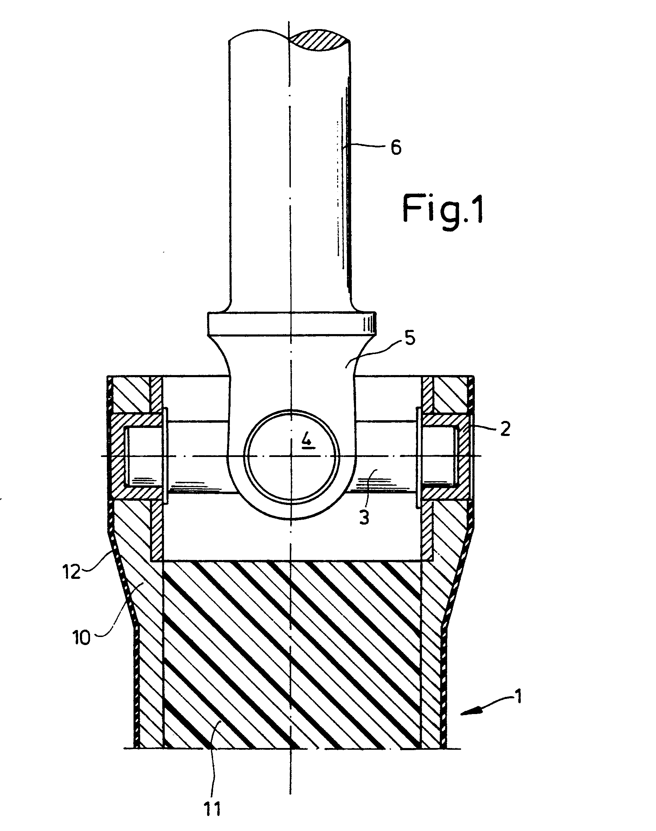

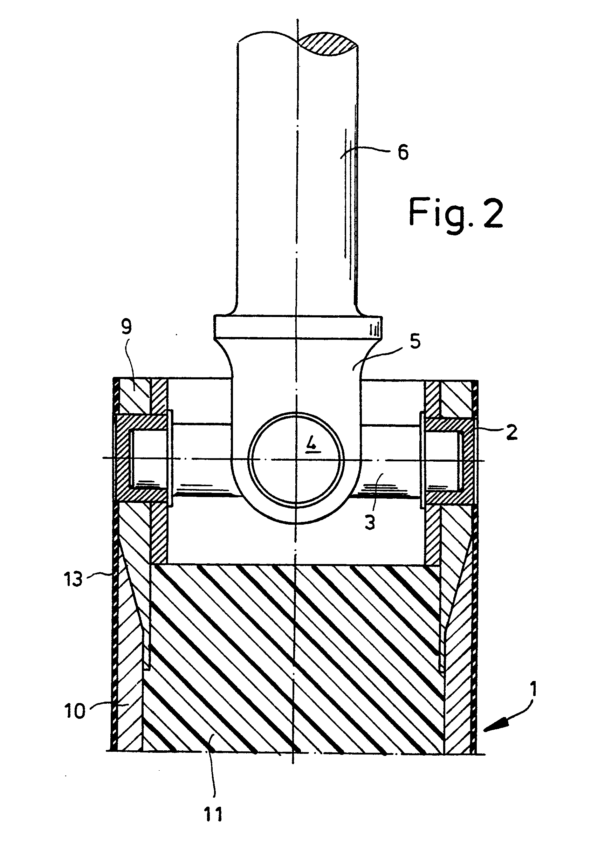

Weitere Vorteile, Merkmale und Einzelheiten der Erfindung ergeben sich aus der nachfolgenden Beschreibung bevorzugter Ausführungsbeispiele sowie anhand der Zeichnung; diese zeigt jeweils in einem schematisierten Längsschnitt sowohl in Fig. 1 als auch in Fig. 2 ein Ausführungsbeispiel eines Teiles einer Kardanwelle 1.

Der Kopf der Kardanwelle 1 weist nach Fig. 1 einen beidseits in Lagerringen 2 ruhenden Kreuzbolzen 3 auf, an dessen Querarmen 4 das U-förmige Joch 5 einer Achse 6 angelenkt ist.

Die Kardanwelle 1 besteht aus einem hohlen Leichtmetallkörper 10, in den ein Kern 11 aus schwingungsdämpfendem Kunststoffschaum eingesetzt ist; die Oberfläche des Leichtmetallkörpers 10 ist von einer chemisch erzeugten Oxydschicht 12 abgedeckt, die der Übersichtlichkeit wegen etwas überhöht wiedergegeben ist.

Bei dem Ausführungsbeispiel nach Fig. 2 ist der Kreuzbolzen 3 -- und mit ihm das Joch 5 -- an einem Einsatzstück 9 der Kardanwelle 1 festgelegt, die aus einem Leichtmetallrohr 10 mit einem Kern 11 aus geschäumtem PVC besteht; über das Leichtmetallrohr 10 ist hier ein Teflonschlauch 13 gezogen, der auch das Einsatzstück 9 teilweise überdeckt.

PATENTANSPRÜCHE

================================

1. Antriebswelle, insbesondere für Fahrzeuge, mit einem rohrförmigen Körper sowie an dessen Enden angebrachten Gelenken, welche jeweils an einem Einsatzkopf des Körpers lagern,

dadurch gekennzeichnet,

daß der Körper (10) aus einem Leichtmetallrohr besteht, dessen Hohlraum mit einem Kern (11) aus Kunststoffschaum gefüllt ist.

2. Antriebswelle nach Anspruch 1, dadurch gekennzeichnet, daß der Kern (11) aus geschäumtem PVC oder PU besteht.

3. Antriebswelle nach Anspruch 1, dadurch gekennzeichnet, daß der Körper (10) mit wenigstens einer Oxydschicht (12) versehen ist.

4. Antriebswelle nach einem der Ansprüche 1 bis 3, dadurch gekennzeichnet, daß den Körper (10) der Antriebswelle (1) ein Kunststoff- oder Gummimantel (13) umgibt.

5. Antriebswelle nach Anspruch 4, dadurch gekennzeichnet, daß der Mantel (13) aus Teflon besteht.

6. Antriebswelle nach wenigstens einem der Ansprüche 1 bis 5, dadurch gekennzeichnet, daß der Kunststoff des Kerns (11) und/oder des Mantels (13) faserverstärkt ausgebildet ist.

0054937

Fig.1

6

5

2

4

3

12

10

1

11

Fig. 2

0054937

## EUROPÄISCHER RECHERCHENBERICHT

Europäisches Patentamt

Nummer der Anmeldung

EP 81 11 0597

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| Y | FR - A - 2 449 818 (ROCKWELL)<br><br>* Seite 7, Zeilen 1-27; Seite 5, Zeilen 8-16; Figur 2 *<br><br>-- | 1,6 |
| Y | GB - A - 2 024 988 (BURMAH OIL)<br><br>* Seite 2, Zeilen 8-46; Figuren 3,4 *<br><br>-- | 1,2 |
| A | US - A - 1 755 387 (CHRISTOPHERSEN)<br><br>* Seite 1, Zeile 90 bis Seite 2, Zeile 66 *<br><br>--------- | 4 |

**KLASSIFIKATION DER ANMELDUNG (Int. Cl.³)**

F 16 C 3/02

**RECHERCHIERTE SACHGEBIETE (Int. Cl.³)**

F 16 C
B 60 K

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| DEN HAAG | 08-03-1982 | BARON |

EPA form 1503.1  06.78